# FASCICULE DE BREVET EUROPEEN

(11) **EP 4 634 010 B1**
(45) Date de publication et mention de la délivrance du brevet: **18.11.2026**
(21) Numéro de dépôt: 23822338.2
(22) Date de dépôt: 11.12.2023
(51) Int. Cl.: B60S 1/04, B60S 1/40, B60S 1/38

(54) **ADAPTATEUR D'UN SYSTÈME D'ESSUYAGE**
ADAPTER FÜR EIN WISCHSYSTEM
ADAPTER FOR A WIPING SYSTEM

(30) Priorité: 14.12.2022 FR 2213405
(43) Date de publication de la demande: 22.10.2025
(73) Titulaire: Valeo Systèmes d'Essuyage, 93012 Bobigny (FR)
(72) Inventeur: GAUCHER, Vincent, 78322 LE MESNIL SAINT DENIS (FR); HOUSSAT, Stephane, 78322 LE MESNIL SAINT DENIS (FR); JOMARD, Olivier, 78322 LE MESNIL SAINT DENIS (FR); BILLOT, Philippe, 78322 LE MESNIL SAINT DENIS (FR)
(74) Mandataire: Valeo Visibility
(86) Numéro de dépôt international: PCT/EP2023/085205
(87) Numéro de publication internationale: WO 2024/126417

(56) Documents cités:
- WO-A1-2020/025219
- DE-U1- 202018 006 139
- US-A1- 2013 117 957

## Description

La présente invention concerne le domaine des systèmes d'essuyage destinés aux véhicules automobiles, et plus particulièrement des adaptateurs faisant partie de tels systèmes d'essuyage.

Les véhicules automobiles sont couramment équipés de systèmes d'essuyage destinés à nettoyer leurs surfaces vitrées, et notamment leur pare-brise. De tels systèmes d'essuyage comprennent au moins un bras d'entraînement et un balai d'essuyage entrainé par le bras d'entraînement. Le bras d'entraînement est relié à un moteur électrique du véhicule et le balai d'essuyage comprend au moins une lame d'essuyage destinée à venir au contact de la surface vitrée à essuyer.

Afin de pouvoir remplacer le balai d'essuyage, un dispositif de connexion est agencé entre ce balai d'essuyage et le bras d'entraînement. Plus particulièrement, le dispositif de connexion comprend un adaptateur agencé entre le bras d'entraînement et un connecteur relié au balai d'essuyage. L'adaptateur est alors solidaire du bras d'entraînement et plus particulièrement d'une extrémité libre de ce bras d'entraînement, une telle coopération étant amovible de telle sorte qu'elle permet de changer le balai d'essuyage lorsque celui-ci est usé.

Lorsque le véhicule automobile roule et que le système d'essuyage est mis en œuvre, un phénomène de sous-pression peut entraîner des défauts d'essuyage, voire un décollement du système d'essuyage du pare-brise qu'il équipe.

Une des solutions permettant de parer à ce phénomène de sous-pression serait l'adjonction d'un béquet sur l'adaptateur du système d'essuyage. Un tel béquet présente toutefois des difficultés d'encombrement qui sont incompatibles avec les fonctions d'essuyage et le champs de vision des occupants avant du véhicule.

WO-A1-2020/025219 montre un adaptateur similaire. La présente invention vise à pallier les inconvénients précités en proposant un adaptateur présentant une forme aérodynamique favorisant le plaquage du système d'essuyage contre le pare-brise, plutôt que son décollement de celui-ci. Ce plaquage est obtenu grâce à la présence de moyens de déflexion sur l'adaptateur qui créent des zones de surpression et de dépression successives.

La présente invention a ainsi pour principal objet un adaptateur configuré pour la fixation d'un balai d'essuyage à un bras d'entraînement d'un système d'essuyage, comprenant au moins une paroi latérale et une paroi supérieure s'étendant principalement selon une direction longitudinale et présentant une première extrémité transversale et une deuxième extrémité transversale, la paroi supérieure étant reliée à sa première extrémité transversale à la paroi latérale, ces parois participant à délimiter un volume dans lequel est disposée au moins partiellement une cavité de réception configurée pour recevoir un connecteur du système d'essuyage. Selon l'invention, l'adaptateur comprend au moins un premier moyen de déflexion disposé à la première extrémité transversale et un deuxième moyen de déflexion disposé à la deuxième extrémité transversale, chacun des moyens de déflexion comprenant au moins une crête faisant saillie de la paroi supérieure.

L'adaptateur selon l'invention est destiné à être intégré au sein d'un système d'essuyage afin d'équiper une surface vitrée d'un véhicule automobile. L'adaptateur comprend une paroi supérieure qui est délimitée transversalement par une première extrémité transversale et une deuxième extrémité transversale, la première de ces extrémités transversales se poursuivant par une paroi latérale. La deuxième extrémité transversale peut alternativement être reliée à une autre paroi latérale ou bien encore être libre. L'adaptateur comprend des moyens de déflexions qui ont pour rôle de créer des perturbations d'un flux d'air qui est projeté sur l'adaptateur. Ces moyens de déflexion permettent plus précisément de former sur une surface de l'adaptateur une succession de zones de surpression et de dépression, ce qui participe à plaquer l'adaptateur contre la surface vitrée que le système d'essuyage dont il fait partie a vocation à essuyer. Les moyens de déflexion sont à cet effet disposés à chacune des extrémités transversales de la paroi supérieure ; on comprend ainsi qu'ils bordent cette paroi supérieure.

Les moyens de déflexion sont des crêtes qui font saillie de la paroi supérieure, c'est-à-dire qu'ils constituent des protubérances sur cette paroi supérieure autrement sensiblement plane.

Selon une caractéristique de l'invention, la crête comprend une arête et deux flancs, cette arête et ces deux flancs faisant saillie de la paroi supérieure.

L'arête de la crête permet de joindre les deux flancs. Elle constitue le point le plus saillant d'un moyen de déflexion donné.

Selon une autre caractéristique de l'invention, Au moins un des moyens de déflexion, et avantageusement tous les moyens de déflection, s'étendent sur toute la longueur de l'adaptateur.

Les moyens de déflexion peuvent de ce fait participer au plaquage de l'adaptateur sur la surface vitrée du véhicule sur toute une longueur de cet adaptateur.

Selon une caractéristique, le premier moyen de déflexion participe à former un bord d'attaque de l'adaptateur, tandis que le deuxième moyen de déflexion participe à former un bord de fuite de l'adaptateur.

On entend ici par « bord d'attaque » une portion de l'adaptateur qui est la première à être en contact avec un flux d'air donné, et par « bord de fuite » une portion de l'adaptateur par laquelle ce flux d'air quitte l'adaptateur. Le premier moyen de déflexion recevra donc le flux d'air avant le deuxième moyen de déflexion.

Selon une caractéristique, l'adaptateur comprend au moins un moyen de déflexion supplémentaire disposé transversalement entre le premier moyen de déflexion et le deuxième moyen de déflexion.

Ce moyen de déflexion supplémentaire, qui correspond par exemple à un troisième moyen de déflexion, est disposé transversalement entre les premier et deuxième moyens de déflexion. Il en résulte alors que ce moyen de déflexion supplémentaire est disposé sur la paroi supérieure entre sa première extrémité transversale et sa deuxième extrémité transversale.

Selon une autre caractéristique de l'invention, les moyens de déflexion sont superposés avec un décalage transversal.

Les moyens de déflexion sont superposés en ce sens qu'ils sont à des distances différentes de la surface vitrée, mais ils sont décalés transversalement puisqu'au moins un est disposé à la première extrémité transversale et un autre est disposé à la deuxième extrémité transversale. Les moyens de déflexion présentent donc une configuration en escalier. À titre d'exemple, pour un mode de réalisation avec un troisième moyen de déflexion tel qu'évoqué ci-avant, une arête du premier moyen de déflexion sera disposée verticalement plus basse qu'une arête du troisième moyen de déflexion, elle-même étant disposée verticalement plus basse qu'une arête du deuxième moyen de déflexion.

Selon une caractéristique, au moins l'un des moyens de déflexion présente une hauteur évolutive ou est longitudinalement discontinu.

La hauteur du moyen de déflexion, qui est sa dimension mesurée sensiblement perpendiculairement à la paroi supérieure, peut alternativement être croissante ou décroissante. On pourrait par exemple envisager un moyen de déflexion présentant une hauteur plus importante au voisinage d'une première extrémité longitudinale de l'adaptateur en comparaison d'une autre hauteur mesurée à une deuxième extrémité longitudinale de l'adaptateur. Une telle variation de la hauteur du moyen de déflexion permet de modifier sa capacité à générer une dépression ou une surpression le long de la direction longitudinale de l'adaptateur. Selon un exemple de discontinuité, le moyen de déflexion peut présenter un dégagement.

Selon une caractéristique de l'invention, la paroi supérieure et/ou la paroi latérale est de forme convexe lorsqu'elle est vue de face.

Selon une autre caractéristique, la paroi latérale présente une paroi d'extension de forme concave lorsqu'elle est vue de face.

La paroi supérieure, la paroi latérale, et optionnellement la paroi d'extension de cette paroi latérale, sont donc creusées puis bombées lorsqu'elles sont respectivement vues de face. Une telle configuration permet, en combinaison avec les moyens de déflexion dont la crête crée une forme concave vue de face, d'obtenir sur une surface de l'adaptateur exposée au flux d'air une alternance entre formes convexes et formes concaves, ce qui participe à la perturbation du flux d'air de sorte à créer une succession de zones de surpression et de dépression.

L'invention vise également un système d'essuyage comprenant un bras d'entraînement, un balai d'essuyage, un connecteur et un adaptateur tel que décrit dans le présent document.

D'autres caractéristiques, détails et avantages de l'invention ressortiront plus clairement à la lecture de la description qui suit d'une part, et d'exemples de réalisation donnés à titre indicatif et non limitatif en référence aux dessins annexés d'autre part, sur lesquels :
[Fig.1] illustre, schématiquement, un système d'essuyage comprenant un adaptateur selon l'invention, selon une vue en perspective ;
[Fig.2] illustre, schématiquement, l'adaptateur du système d'essuyage de la [Fig.1] selon une vue en perspective ;
[Fig.3] illustre, schématiquement, une vue de coupe de l'adaptateur de la [Fig.2] selon une coupe A-A visible sur la [Fig.2] ;
[Fig.4] illustre, schématiquement, un mode de réalisation alternatif de l'adaptateur de la [Fig.2].

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

Sur les figures, les éléments communs à plusieurs figures conservent la même référence.

Dans la description détaillée qui va suivre, les dénominations « longitudinale », « transversale » et « verticale » se réfèrent à l'orientation de l'adaptateur selon l'invention. Une direction longitudinale correspond à une direction principale d'allongement de l'adaptateur, cette direction longitudinale étant parallèle à un axe longitudinal L d'un repère L, V, T illustré sur les figures. Une direction transversale correspond à une direction selon laquelle la première extrémité transversale et la deuxième extrémité transversale sont opposées, cette direction transversale étant parallèle à un axe transversal T du repère L, V, T et cet axe transversal T étant perpendiculaire à l'axe longitudinal L. Enfin, une direction verticale correspond à une direction parallèle à un axe vertical V du repère L, V, T, cet axe vertical V étant perpendiculaire à l'axe longitudinal L et à l'axe transversal T.

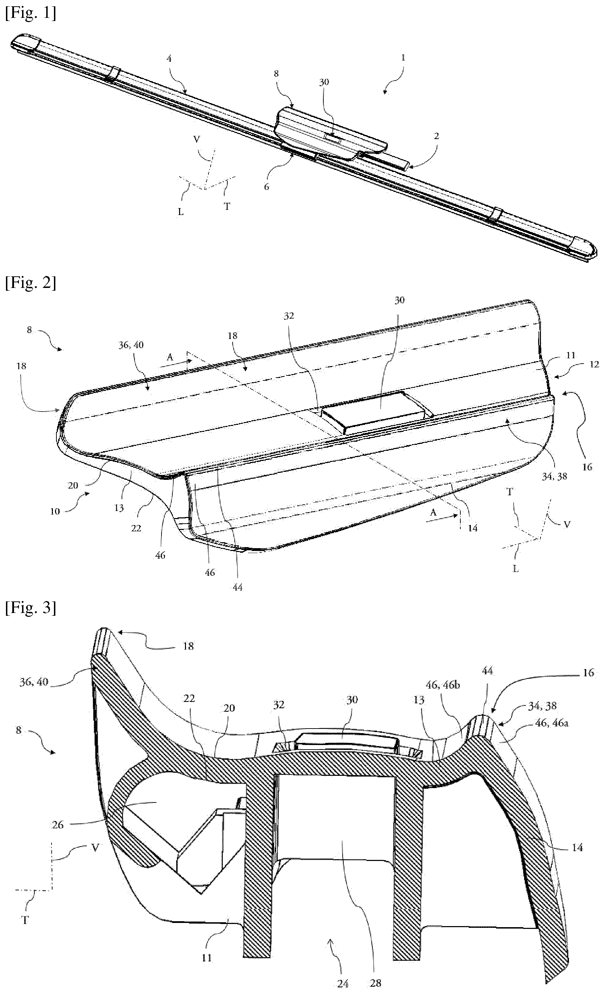

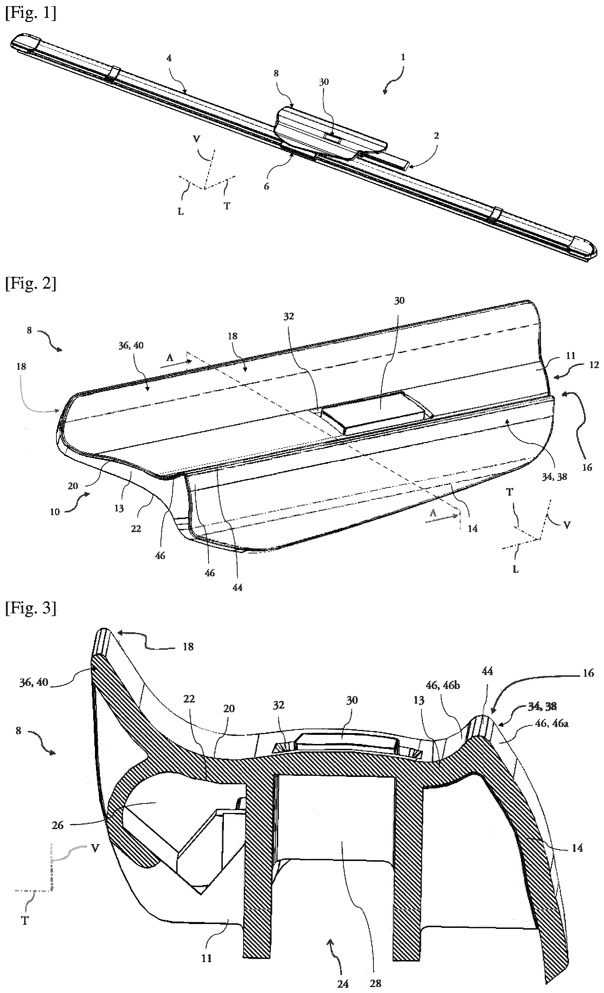

La [Fig.1] illustre ainsi, schématiquement, un système d'essuyage 1. Ce système d'essuyage 1 est destiné à assurer le nettoyage d'une surface vitrée d'un véhicule, par exemple un pare-brise, de manière à améliorer la visibilité qu'a un conducteur de la route située devant le véhicule. Le système d'essuyage 1 comprend au moins un bras d'entraînement 2, dont seulement une portion est représentée ici, qui porte à une extrémité un balai d'essuyage 4 qui s'étend principalement le long de la direction longitudinale L.

Au sein du système d'essuyage 1, le bras d'entraînement 2 et le balai d'essuyage 4 sont associés l'un à l'autre par l'intermédiaire d'un dispositif de connexion faisant intervenir un connecteur 6 et un adaptateur 8, cet adaptateur 8 étant en recouvrement du connecteur 6. Plus particulièrement, le connecteur 6 est rendu solidaire du balai d'essuyage 4 tandis que l'adaptateur 8 est rendu solidaire du bras d'entraînement 2, l'adaptateur 8 et le connecteur 6 coopérant via une liaison pivot.

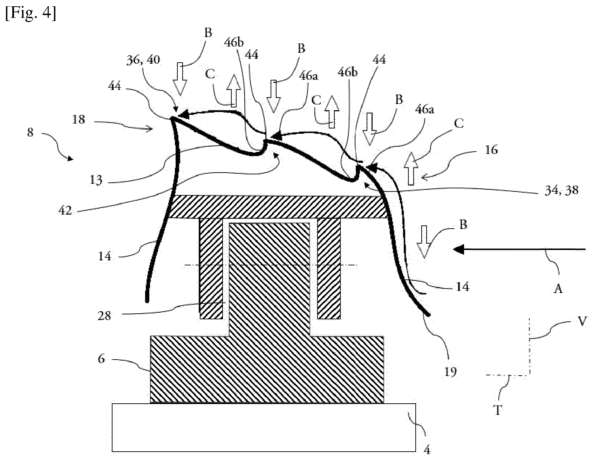

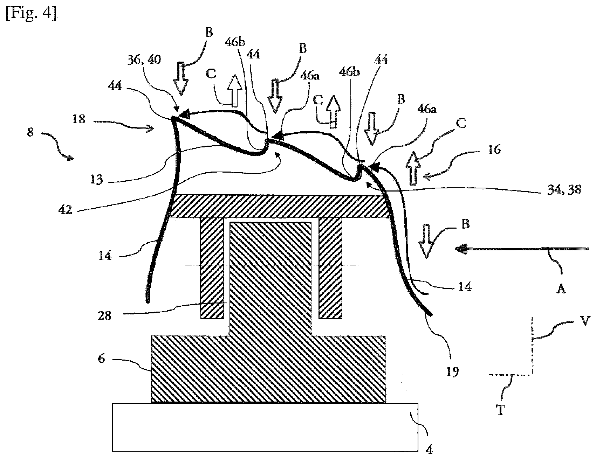

L'adaptateur 8 va maintenant être décrit plus en détail en relation avec les figures 2 à 4. L'adaptateur 8 s'étend selon une direction principale d'allongement qui correspond à une direction longitudinale L. Il comporte une première extrémité longitudinale 10 et une deuxième extrémité longitudinale 12 opposées selon cette direction longitudinale L. L'adaptateur 8 comporte un corps principal 11 qui est formé d'une paroi supérieure 13 et d'au moins une paroi latérale 14. L'adaptateur 8 peut, selon les modes de réalisation, comprendre une ou deux parois latérales 14. Un premier mode de réalisation présentant un adaptateur 8 à une seule paroi latérale 14 est illustré aux figures 2 et 3, tandis qu'en [Fig.4] est représenté un deuxième mode de réalisation avec deux parois latérales 14.

La paroi supérieure 13 et la ou les parois latérales 14 s'étendent principalement selon la direction longitudinale L. La paroi supérieure 13 est délimitée transversalement par une première extrémité transversale 16 et par une deuxième extrémité transversale 18.

Comme cela est visible à la [Fig.3], la première extrémité transversale 16 constitue une jonction entre la paroi supérieure 13 et la paroi latérale 14 ; en d'autres termes, la paroi supérieure 13 et la paroi latérale 14 sont reliées au niveau de la première extrémité transversale 16. Dans les modes de réalisation présentant deux parois latérales 14, la deuxième extrémité transversale 18 constituera une intersection entre la paroi supérieure 13 et l'autre paroi latérale 14.

Lorsqu'elles sont vues de face, c'est-à-dire selon le point d'observation de la [Fig.2], la paroi supérieure 13 et la paroi latérale 14 disposée à sa première extrémité transversale 16 ont une forme convexe. Cette paroi latérale 14 peut, dans certains modes de réalisation et comme illustré en [Fig.4], présenter une paroi d'extension 19 qui constitue un prolongement selon la direction globalement verticale V. Cette paroi d'extension 19 présente ici une forme concave lorsqu'elle est vue de face, comme on peut le voir de la [Fig.4] en se plaçant au niveau de la flèche référencée A.

Ces formes convexes ou concaves de la paroi supérieure 13, de la paroi latérale 14, et optionnellement de la paroi d'extension 19, participent à perturber un flux d'air A, représenté par une flèche noire sur la [Fig.4], lorsque celui-ci arrive à proximité de l'adaptateur 8.

La paroi supérieure 13 présente une face supérieure 20 et une face inférieure 22 opposées l'une à l'autre selon une direction verticale V. La face inférieure 22 est destinée à être en regard du connecteur 6, du balai d'essuyage 4 et du bras d'entraînement 2. À cet effet, la paroi supérieure 13 et la ou les parois latérales 14 sont disposées de sorte à participer à délimiter entre elles un volume 24 de l'adaptateur 8, ce volume 24 étant notamment visible aux figures 3 et 4.

Le volume 24 présente en son sein plusieurs renfoncements destinés à loger des composants du système d'essuyage 1, qui sont particulièrement visibles en [Fig.3]. Au titre de ces renfoncements, le volume 24 comprend notamment un logement de réception 26 configuré pour recevoir le bras d'entraînement 2 et une cavité de réception 28 configurée pour recevoir le connecteur 6.

Le logement de réception 26 est formé au sein du volume 24 à partir de la face inférieure 22 ; plus précisément, il s'étend à partir de celle-ci, le long de la deuxième extrémité transversale 18 de la paroi supérieure 13. Le bras d'entraînement 2 peut coulisser au sein de l'adapteur 8 jusqu'à venir en butée contre son logement de réception 26.

Similairement, la cavité de réception 28 s'étend à partir de la face inférieure 22 et à distance de celle-ci au moins en partie dans le volume 24. Elle est en forme de parallélépipède rectangle et est centrée transversalement au sein du volume 24 ; on comprend que la cavité de réception 28 est sensiblement à équidistance de chacune des extrémités transversales 16, 18 de la parois supérieure 13. La cavité de réception 28 reçoit le connecteur 6 de sorte que celui-ci s'emboîte en son sein lorsqu'il est intégré au système d'essuyage 1.

L'adaptateur 8 comprend, afin de se verrouiller ou se déverrouiller au bras d'entraînement 2, un dispositif de verrouillage 30. Ce dispositif de verrouillage 30 a pour rôle de bloquer ou libérer une translation du bras d'entraînement 2 par rapport à l'adaptateur 8. Le dispositif de verrouillage 30 comprend à cet effet un bouton poussoir qui affleure la paroi supérieure 13 de l'adaptateur 8. L'organe de verrouillage 30 est disposé au sein d'une ouverture 32 ménagée dans cette paroi supérieure 13 et qui s'étend de la face supérieure 20 à la face inférieure 22 de cette paroi. L'organe de verrouillage 30 a ici une forme sensiblement rectangulaire. Il est disposé, sur la paroi supérieure 13, sensiblement à équidistance des deux extrémités transversales 16, 18.

Selon l'invention, l'adaptateur 8 comprend au moins deux moyens de déflexion 34, 36 qui participent à perturber le flux d'air A lorsqu'il vient au contact de l'adaptateur 8. En particulier, la présence de ces moyens de déflexion 34, 36 permet de former sur la face supérieure 20 de la paroi supérieure 13 une succession de zones de surpression et de dépression, qui augmente le placage de l'adaptateur 8 sur la surface vitrée qu'il équipe.

Dans le premier mode de réalisation des figures 2 et 3, l'adaptateur 8 présente plus précisément un premier moyen de déflexion 34 et un deuxième moyen de déflexion 36, le premier moyen de déflexion 34 étant disposé à la première extrémité transversale 16 de la paroi supérieure 13 et le deuxième moyen de déflexion 36 étant disposé à la deuxième extrémité transversale 18 de cette même paroi supérieure. On comprend ainsi que le premier moyen de déflexion 34 et le deuxième moyen de déflexion 36 sont opposés selon la direction transversale T.

Le premier moyen de déflexion 34 forme un bord d'attaque 38 de l'adaptateur 8, c'est-à-dire un bord avant qui est destiné à recevoir le flux d'air A en premier. Inversement, le deuxième moyen de déflexion 36 forme un bord de fuite 40 de l'adaptateur 8, qui est un bord arrière par lequel le flux d'air A quitte l'adaptateur 8.

Dans le deuxième mode de réalisation représenté en [Fig.4], l'adaptateur comprend au moins un moyen de déflexion supplémentaire 42, qui est ici un troisième moyen de déflexion 42. Ce troisième moyen de déflexion 42 est disposé transversalement entre le premier moyen de déflexion 34 et le deuxième moyen de déflexion 36. Tel que visible sur la [Fig.4], le troisième moyen de déflexion 42 est sensiblement à équidistance de la première extrémité transversale 16 et de la deuxième extrémité transversale 18.

Ces moyens de déflexion 34, 36, 42 peuvent être des éléments distincts qui sont fixés sur la paroi supérieure 13. Préférentiellement, ce sont des protubérances de la paroi supérieure 13, c'est-à-dire qu'ils sont issus de la même matière que celle-ci comme c'est le cas sur les deux modes de réalisation illustrés ici. Les moyens de déflexion 34, 36, 42 s'étendent le long de la direction longitudinale L, de la première extrémité longitudinale 14 à la deuxième extrémité longitudinale 16. Ces moyens de déflexion 34, 36, 42, qu'ils soient double ou triple, peuvent se prolonger sur toute la longueur de l'adaptateur 8 ou seulement sur une partie de cette longueur, formant ainsi des moyens de déflections plus courts que l'adaptateur ou une discontinuité le long de ces moyens de déflections 34, 36, 42.

Que ce soit dans le premier mode de réalisation ou dans le deuxième mode de réalisation, chaque moyen de déflexion 34, 36, 42 comprennent une crête qui fait saillie de la paroi supérieure 13. Ainsi, lorsque le moyen de déflexion 34, 36, 42 est vu en coupe comme c'est le cas en [Fig.3] ou 4, il présente un profil en érection, c'est-à-dire érigé au-dessus de la paroi supérieure 13.

Une crête correspond à un ensemble formé par une arête 44 et deux flancs 46 bordant cette arête 44, l'ensemble faisant saillie de la paroi supérieure 13. En d'autres termes, l'arête 44 constitue le point le plus saillant d'un moyen de déflexion 34, 36, 42 donné, les deux flancs 46 s'étendant de part et d'autre de cette arête 44 selon la direction longitudinale.

Selon un aspect intéressant, un premier flanc 46a est convexe, en regardant l'adaptateur 8 de face, tandis qu'une second flanc 46b est concave selon le même point de vue.

Sur les figures 2 et 3, seul le premier moyen de déflexion 34 est ainsi formé. Le deuxième moyen de déflection 36 comporte seulement un premier flanc concave, une portion convexe étant alors ménagée à la jonction entre la paroi supérieure 13 et le deuxième moyen de déflection 36.

Comme cela est particulièrement visible en [Fig.2], au moins l'un des moyens de déflexion 34, 36 présente une hauteur constante, c'est-à-dire qu'une dimension mesurée entre un point de son arête 44 et un point le plus proche disposé sur la face inférieure 22 de la paroi supérieure 13 est constante sur toute une longueur du moyen de déflexion 34, 36.

Alternativement et bien que cela ne soit pas illustré sur les figures, il serait possible d'envisager des moyens de déflexion 34, 36, 42 qui au contraire auraient une hauteur évolutive. Leur hauteur pourrait alors varier entre la première extrémité longitudinale 10 et la deuxième extrémité longitudinale 12. À titre d'exemple, le moyen de déflexion 34, 36, 42 pourrait présenter une hauteur plus importante à la première extrémité longitudinale 10 qu'à la deuxième extrémité longitudinale 12, ou encore le moyen de déflexion 34, 36, 42 pourrait avoir des hauteurs similaires à proximité de chacune des première et deuxième extrémités 10, 12 mais présenter une hauteur réduite ou bien accrue en une portion longitudinale centrale du moyen de déflexion 34, 36, 42.

En outre, on pourrait imaginer sans sortir du cadre de l'invention des modes de réalisation dans lesquels au moins un moyen de déflexion 34, 36, 42 est discontinu. Il serait alors possible d'envisager dans ce ou ces moyens de déflexion 34, 36, 42 un dégagement.

Tel que cela est notamment illustré aux figures 3 et 4, les moyens de déflexion 34, 36, 42 sont disposés selon une configuration en escalier. On entend par là que ces moyens de déflexion 34, 36, 42 sont superposés les uns aux autres tout en présentant un décalage selon la direction transversale T. Cela se traduit par le fait que, par exemple pour le deuxième mode de réalisation avec trois moyens de déflexion 34, 36, 42, l'arête 44 du premier moyen de déflexion 34 est disposée verticalement plus basse que l'arête 44 du troisième moyen de déflexion 42, qui est elle-même disposée verticalement plus basse que l'arête 44 du deuxième moyen de déflexion 36.

Comme cela a été évoqué précédemment, la présence de moyens de déflexion 34, 36, 42 ainsi que la forme particulière des parois 12, 14, 19 de l'adaptateur 8 participe à perturber un écoulement du flux d'air lorsque celui-ci est à proximité de l'adaptateur 8. Une telle perturbation va maintenant être décrite plus en détail en relation avec la [Fig.4].

Le flux d'air A circule transversalement le long de l'adaptateur 8 au niveau de sa paroi d'extension 19 et de sa paroi latérale 14. La paroi d'extension 19 présentant une forme concave lorsqu'elle est vue depuis la flèche A, elle génère une surpression du flux d'air A en son endroit, une telle surpression étant ici figurée par une flèche B dirigée vers le bas. À l'inverse, la paroi latérale 14 est de forme convexe lorsqu'elle est vue de face, c'est-à-dire depuis la flèche A, ce qui génère une dépression représentée par une flèche C tournée vers le haut.

L'arête 44 d'un moyen de déflexion 34, 36, 42 forme une frontière entre, d'une part le premier flanc 46a en amont de l'arête 44, selon le sens de déplacement du flux d'air A, qui génère une surpression B, et d'autre part le deuxième flanc 46b, en aval de l'arête 44 selon le sens de déplacement du flux d'air A, qui génère une dépression C. Cette alternance de pics et de creux et par conséquent cette succession de zones de surpression et de dépression augmente le plaquage de l'adaptateur 8 contre la surface vitrée qu'il équipe.

La présente invention propose ainsi un adaptateur dont la forme aérodynamique dotée de moyens de déflexion permet d'augmenter un plaquage du balai d'essuyage contre la surface vitrée que le système d'essuyage a vocation à essuyer.

## Revendications

1. Adaptateur (8) configuré pour la fixation d'un balai d'essuyage (4) à un bras d'entraînement (2) d'un système d'essuyage (1), comprenant au moins une paroi latérale (14) et une paroi supérieure (13) s'étendant principalement selon une direction longitudinale (L) et présentant une première extrémité transversale (16) et une deuxième extrémité transversale (18), la paroi supérieure (13) étant reliée à sa première extrémité transversale (16) à la paroi latérale (14), ces parois (12, 14) participant à délimiter un volume (24) dans lequel est disposée au moins partiellement une cavité de réception (28) configurée pour recevoir un connecteur (6) du système d'essuyage (1), l'adaptateur (8) étant **caractérisé en ce qu'**il comprend au moins un premier moyen de déflexion (34) disposé à la première extrémité transversale (16) et un deuxième moyen de déflexion (36) disposé à la deuxième extrémité transversale (18), chacun des moyens de déflexion (34, 36) comprenant au moins une crête faisant saillie de la paroi supérieure (13).

2. Adaptateur (8) selon la revendication précédente, dans lequel la crête comprend une arête (44) et deux flancs (46, 46a, 46b), cette arête (44) et ces deux flancs (46, 46a, 46b) faisant saillie de la paroi supérieure (13).

3. Adaptateur (8) selon l'une quelconque des revendications précédentes, dans lequel au moins un des moyens de déflexion (34, 36) s'étend sur toute une longueur de l'adaptateur (8).

4. Adaptateur (8) selon l'une quelconque des revendications précédentes, dans lequel le premier moyen de déflexion (34) participe à former un bord d'attaque (38) de l'adaptateur (8), tandis que le deuxième moyen de déflexion (36) participe à former un bord de fuite (40) de l'adaptateur (8).

5. Adaptateur (8) selon l'une quelconque des revendications précédentes, comprenant au moins un moyen de déflexion supplémentaire (42) disposé transversalement entre le premier moyen de déflexion (34) et le deuxième moyen de déflexion (36).

6. Adaptateur (8) selon la revendication précédente, dans lequel les moyens de déflexion (34, 36, 42) sont superposés avec un décalage transversal.

7. Adaptateur (8) selon l'une quelconque des revendications précédentes, dans lequel au moins l'un des moyens de déflexion (34, 36, 42) présente une hauteur constante sur toute une longueur de l'adaptateur (8).

8. Adaptateur (8) selon l'une quelconque des revendications précédentes, dans lequel au moins l'un des moyens de déflexion (34, 36, 42) présente une hauteur évolutive ou est longitudinalement discontinu.

9. Adaptateur (8) selon l'une quelconque des revendications précédentes, dans lequel la paroi supérieure (13) et/ou la paroi latérale (14) est de forme convexe lorsqu'elle est vue de face.

10. Système d'essuyage (1) comprenant un bras d'entraînement (2), un balai d'essuyage (4), un connecteur (6) et un adaptateur (8) selon l'une quelconque des revendications précédentes.

## Patentansprüche

1. Adapter (8), der zur Befestigung eines Wischblatts (4) an einem Antriebsarm (2) eines Wischsystems (1) konfiguriert ist, umfassend mindestens eine Seitenwand (14) und eine obere Wand (13), die sich hauptsächlich in einer Längsrichtung (L) erstrecken und ein erstes Querende (16) und ein zweites Querende (18) aufweisen, wobei die obere Wand (13) an ihrem ersten Querende (16) mit der Seitenwand (14) verbunden ist, wobei diese Wände (12, 14) dazu beitragen, ein Volumen (24) zu begrenzen, in dem zumindest teilweise ein Aufnahmehohlraum (28) angeordnet ist, der zur Aufnahme eines Verbinders (6) des Wischsystems (1) konfiguriert ist, wobei der Adapter (8) **dadurch gekennzeichnet ist, dass** er mindestens ein erstes Ablenkmittel (34), das am ersten Querende (16) angeordnet ist, und ein zweites Ablenkmittel (36) umfasst, das am zweiten Querende (18) angeordnet ist, wobei jedes der Ablenkmittel (34, 36) mindestens einen Kamm umfasst, der von der oberen Wand (13) vorsteht.

2. Adapter (8) nach dem vorhergehenden Anspruch, bei dem der Kamm eine Kante (44) und zwei Flanken (46, 46a, 46b) umfasst, wobei diese Kante (44) und diese zwei Flanken (46, 46a, 46b) von der oberen Wand (13) vorstehen.

3. Adapter (8) nach einem der vorhergehenden Ansprüche, bei dem sich mindestens eines der Ablenkmittel (34, 36) über die gesamte Länge des Adapters (8) erstreckt.

4. Adapter (8) nach einem der vorhergehenden Ansprüche, bei dem das erste Ablenkmittel (34) dazu beiträgt, eine Anströmkante (38) des Adapters (8) zu bilden, während das zweite Ablenkmittel (36) dazu beiträgt, eine Abströmkante (40) des Adapters (8) zu bilden.

5. Adapter (8) nach einem der vorhergehenden Ansprüche, umfassend mindestens ein zusätzliches Ablenkmittel (42), das quer zwischen dem ersten Ablenkmittel (34) und dem zweiten Ablenkmittel (36) angeordnet ist.

6. Adapter (8) nach dem vorhergehenden Anspruch, bei dem die Ablenkmittel (34, 36, 42) mit einem Querversatz übereinander angeordnet sind.

7. Adapter (8) nach einem der vorhergehenden Ansprüche, bei dem mindestens eines der Ablenkmittel (34, 36, 42) über die gesamte Länge des Adapters (8) eine konstante Höhe aufweist.

8. Adapter (8) nach einem der vorhergehenden Ansprüche, bei dem mindestens eines der Ablenkmittel (34, 36, 42) eine veränderliche Höhe aufweist oder in Längsrichtung diskontinuierlich ist.

9. Adapter (8) nach einem der vorhergehenden Ansprüche, bei dem die obere Wand (13) und/oder die Seitenwand (14) in der Vorderansicht eine konvexe Form aufweist.

10. Wischsystem (1), umfassend einen Antriebsarm (2), ein Wischblatt (4), einen Verbinder (6) und einen Adapter (8) nach einem der vorhergehenden Ansprüche.

## Claims

1. An adapter (8) configured to fasten a wiper blade (4) to a drive arm (2) of a wiper system (1), comprising at least one side wall (14) and an upper wall (13) extending mainly in a longitudinal direction (L) and having a first transverse end (16) and a second transverse end (18), the upper wall (13) being connected at its first transverse end (16) to the side wall (14), these walls (12, 14) contributing to delimiting a volume (24) in which a receiving cavity (28) configured to receive a connector (6) of the wiper system (1) is at least partially arranged, the adapter (8) being **characterized in that** it comprises at least a first deflection means (34) arranged at the first transverse end (16) and a second deflection means (36) arranged at the second transverse end (18), each of the deflection means (34, 36) comprising at least one ridge projecting from the upper wall (13).

2. The adapter (8) as claimed in the preceding claim, in which the ridge comprises an edge (44) and two flanks (46, 46a, 46b), this edge (44) and these two flanks (46, 46a, 46b) projecting from the upper wall (13).

3. The adapter (8) as claimed in either one of the preceding claims, wherein at least one of the deflection means (34, 36) extends along an entire length of the adapter (8).

4. The adapter (8) as claimed in any one of the preceding claims, wherein the first deflection means (34) contributes to forming a leading edge (38) of the adapter (8), while the second deflection means (36) contributes to forming a trailing edge (40) of the adapter (8).

5. The adapter (8) as claimed in any one of the preceding claims, comprising at least one additional deflection means (42) arranged transversely between the first deflection means (34) and the second deflection means (36).

6. The adapter (8) as claimed in the preceding claim, wherein the deflection means (34, 36, 42) are superposed with a transverse offset.

7. The adapter (8) as claimed in any one of the preceding claims, wherein at least one of the deflection means (34, 36, 42) has a constant height along an entire length of the adapter (8).

8. The adapter (8) as claimed in any one of the preceding claims, wherein at least one of the deflection means (34, 36, 42) has a varying height or is longitudinally discontinuous.

9. The adapter (8) as claimed in any one of the preceding claims, wherein the upper wall (13) and/or the side wall (14) have/has a convex shape when viewed from the front.

10. A wiper system (1) comprising a drive arm (2), a wiper blade (4), a connector (6) and an adapter (8) as claimed in any one of the preceding claims.
